(19) Europäisches Patentamt
European Patent Office
Office européen des brevets

(11) **EP 3 191 355 B1**

(12) **EUROPÄISCHE PATENTSCHRIFT**

(45) Veröffentlichungstag und Bekanntmachung des Hinweises auf die Patenterteilung:
**28.07.2021   Patentblatt 2021/30**

(21) Anmeldenummer: **15745193.1**

(22) Anmeldetag: **31.07.2015**

(51) Int Cl.:
*B60W 10/04* (2006.01)    *B60W 10/18* (2012.01)
*B60W 30/16* (2020.01)    *B60W 30/18* (2012.01)
*B60W 40/04* (2006.01)    *B60W 50/06* (2006.01)
*B60W 50/00* (2006.01)    *B60W 30/17* (2020.01)

(86) Internationale Anmeldenummer:
**PCT/EP2015/067640**

(87) Internationale Veröffentlichungsnummer:
**WO 2016/037765 (17.03.2016 Gazette 2016/11)**

(54) **ABSTANDSREGELSYSTEM FÜR KRAFTFAHRZEUGE**

DISTANCE CONTROL SYSTEM FOR MOTOR VEHICLES

SYSTÈME DE RÉGULATION DE DISTANCE DESTINÉ À DES VÉHICULES AUTOMOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2014   DE 102014218198**

(43) Veröffentlichungstag der Anmeldung:
**19.07.2017   Patentblatt 2017/29**

(73) Patentinhaber: **Robert Bosch GmbH**
**70442 Stuttgart (DE)**

(72) Erfinder: **SCHUBERT, Michael**
**75382 Althengstett (DE)**

(56) Entgegenhaltungen:
WO-A1-2007/045523        DE-A1- 10 349 434
DE-A1-102006 056 631     DE-A1-102008 047 771

EP 3 191 355 B1

## EP 3 191 355 B1

**Beschreibung**

Die Erfindung betrifft ein Abstandsregelsystem für Kraftfahrzeuge, mit einem Sensor zur Messung des Abstands zu einem vorausfahrenden Fahrzeug, einem Abstandsregler zur Berechnung von Regeleingriffen in das Antriebs- und/oder Bremssystem des eigenen Fahrzeugs zur Regelung des Abstands auf einen Sollabstand, wobei in dem Abstandsregler ein Verstimmungsparameter einstellbar ist, der die Stärke der Reaktion des Abstandsreglers auf Regelabweichungen bestimmt, und mit ein Stauerkennungsmodul.

Stand der Technik

Kraftfahrzeuge werden zunehmend mit elektronischen Geschwindigkeits- und Abstandsregelsystemen ausgerüstet. In Freifahrt wird die Geschwindigkeit des eigenen Fahrzeugs durch den Geschwindigkeitsregler auf eine vom Fahrer wählbare Sollgeschwindigkeit geregelt. In Folgefahrt, wenn sich ein vorausfahrendes Fahrzeug vor dem eigenen Fahrzeug befindet, werden Abstand und Relativgeschwindigkeit des vorausfahrenden Fahrzeugs mit Hilfe eines Radarsensors gemessen, und durch entsprechende Beschleunigung oder Verzögerung des eigenen Fahrzeugs wird der Abstand auf einen geschwindigkeitsabhängigen Sollabstand geregelt, so dass das vorausfahrende Fahrzeug mit einer vorbestimmten, in der Regel vom Fahrer wählbaren Zeitlücke verfolgt wird.

Einige Systeme dieser Art bieten dem Fahrer auch die Möglichkeit, durch Einstellung von Parametern des Abstandsreglers das Regelverhalten zu beeinflussen und an seine persönlichen Wünsche und Vorlieben anzupassen. Insbesondere kann so zwischen einer eher dynamischen Fahrweise, gekennzeichnet durch zügigere Beschleunigungen und ggf. entsprechend heftigere Bremsmanöver, und einer eher ausgeglichenen, in der Regel kraftstoffsparenderen Fahrweise gewählt werden.

In bestimmten Verkehrssituationen, beispielsweise in Stausituationen, ließen sich durch die Wahl der ausgeglicheneren Fahrweise beträchtliche Kraftstoffersparnisse erzielen. Ein Problem besteht jedoch darin, dass diese Abstimmung des Regelsystems bei vielen Kraftfahrzeugführern nur auf geringe Akzeptanz stößt, da sie nicht dem intuitiven Fahrverhalten des menschlichen Fahrers entspricht.

Abstandsregelsystem der oben genannten Art sind aus WO 2007/045523 A1 und DE 10 2006 056631 A1 bekannt. Bei diesen Systemen wird in einer Stausituation die Stärke der Regeleingriffe modifiziert, indem beispielsweise bei einem Regeleingriff nur eine dem Betrage nach kleinere Sollverzögerung des Fahrzeugs zugelassen wird. Ein ähnliches System beschreibt auch DE 103 49 434 A1.

Offenbarung der Erfindung

Aufgabe der Erfindung ist es, ein Abstandsregelsystem zu schaffen, dass in bestimmten Verkehrssituationen eine Kraftstoffeinsparung ermöglicht.

Diese Aufgabe wird erfindungsgemäß gelöst durch einen Verstimmungsregler, der, wenn das Stauerkennungsmodul einen Verkehrstau erkennt, auf die Häufigkeit von Regeleingriffen reagiert, deren Stärke oberhalb einer gewissen Mindeststärke liegt, und der in Abhängigkeit von dieser Häufigkeit einen Verstimmungsparameter an den Abstandsregler (16) ausgibt und mit dem Verstimmungsparameter als Stellgröße die Häufigkeit von Regeleingriffen, deren Stärke oberhalb einer gewissen Mindeststärke liegt, auf eine an die Stausituation angepasste Sollhäufigkeit regelt.

Die Erfindung erlaubt es somit, in Stausituationen den Abstandsregler automatisch so zu verstimmen, dass sich das Regelverhalten in Richtung einer Verringerung der Amplitude der Regeleingriffe, insbesondere der Beschleunigungen und Verzögerungen, und somit in Richtung einer kraftstoffsparenderen Fahrweise ändert.

Ein besonderer Vorteil besteht darin, dass der Verstimmungsregler erst nach und nach in das Geschehen eingreift, wenn staubedingt die Häufigkeit von stärkeren Regeleingriffen zunimmt. Als Reaktion die zunehmende Häufigkeit solcher Regeleingriffe wird der Verstimmungsparameter so verändert, dass die Häufigkeit trotz des Staus wieder auf ein normales Maß zurückgeführt wird, wodurch sich ein allmählicher und für den Fahrer akzeptabler Übergang auf eine kraftstoffsparendere Fahrweise ergibt. Der Verstimmungsregler bildet so einen überlagerten Regelkreis, der das Regelverhalten des Abstandsreglers beeinflusst, und zwar mit einer Zeitkonstanten, die größer ist als die Zeitkonstante des Abstandsreglers selbst. Die Anpassung an die jeweilige Verkehrssituation (Häufigkeit des staubedingten Wechsels zwischen Beschleunigung und Verzögerung) erfolgt dabei automatisch dadurch, dass in dem überlagerten Regelkreis ein neues Gleichgewicht eingeregelt wird. Damit erübrigt sich die Implementierung von speziellen Algorithmen zur näheren Analyse der Verkehrssituation und zur Anpassung der Regelstrategie entsprechend dem Analyseergebnis. Es werden auch keine zusätzlichen Sensoren (Videosensoren, Navigationssystem, etc.) zur Erfassung des Verkehrsumfelds benötigt.

Vorteilhafte Ausgestaltungen und Weiterbildungen der Erfindung sind in den Unteransprüchen angegeben.

Die Stauerkennung kann in bekannter Weise durch Messung der Orte und Geschwindigkeiten vorausfahrender Fahrzeuge mit Hilfe des Radarsensors erfolgen. In einer vorteilhaften Ausführungsform wird jedoch die Stausituation anhand der Maximalgeschwindigkeit erkannt, die vor einer Verzögerung des eigenen Fahrzeugs (mit einer gewissen Mindeststärke) erreicht wurde. Die Bewertung der Maximalgeschwindigkeit kann dabei vom jeweiligen Straßentyp (Stadt verkehr, Landstraße oder Autobahn) abhängig sein. Dieses Verfahren zur Stauerkennung beruht auf der Überlegung, dass in einer Stausituation typischerweise ein häufiger Wechsel zwischen Beschleunigung und Verzögerung stattfindet, wobei in den Beschleunigungsphasen nur relativ geringe Maximalgeschwindigkeiten erreicht werden. Wenn dagegen die Verzögerung nach einer Fahrt mit relativ hoher Maximalgeschwindigkeit eintritt, muss dies (noch) nicht auf einen Stau hindeuten, sondern es kann sich auch um eine einmalige, temporäre Störung des Verkehrsflusses handeln. Für die Zwecke der Erfindung spielt es keine Rolle, ob die auf diese Weise als "Stau" erkannte Verkehrssituation wirklich ein Verkehrsstau im eigentlichen Sinne ist. Entscheidend ist nur, dass sich anhand dieses Kriteriums Situationen erkennen lassen, in denen eine ausgeglichenere Fahrweise eine signifikante Kraftstoffersparnis verspricht.

Gemäß einer Weiterbildung können anhand der vor einer Abbremsung erreichten Maximalgeschwindigkeit auch unterschiedliche Stausituationen klassifiziert werden. Beispielsweise liegen typische Werte der Maximalgeschwindigkeit für einen langsamen Stau nach Unfällen etwa in der Größenordnung von 25 km/h, bei einem "normalen" Stau bei Fahrspur-Verengung in der Größenordnung von etwa 40 km/h und bei zähfließendem Verkehr mit Geschwindigkeitsschwankungen etwa in der Größenordnung von 60 km/h.

Anhand dieser Klassifizierung kann dann situationsabhängig festgelegt werden, wie hoch die Mindeststärke der Regeleingriffe sein soll, die bei der Regelung der Häufigkeit gezählt werden. Die Mindeststärke wird dann so festgelegt, dass Regeleingriffe unterhalb dieser Mindeststärke in Anbetracht der erkannten Stauklasse noch als Merkmal einer kraftstoffsparenden Fahrweise angesehen werden können. Als Maß für die Bewertung der Stärke der Regeleingriffe dient dabei vorzugsweise der Betrag der Beschleunigung und/oder Verzögerung des eigenen Fahrzeugs. Beispielsweise kann bei einem langsamen Stau noch von einer kraftstoffsparenden Fahrweise gesprochen werden, wenn die Verzögerung, also die negative Beschleunigung des eigenen Fahrzeugs bei -1 $m/s^2$ liegt. In den anderen Stauklassen, also bei Fahrspur-Verengungen oder zähfließendem Verkehr kann die Verzögerung auch bei kraftstoffsparender Fahrweise, beispielsweise auch Werte bis zu -1,5 $m/s^2$ ereichen.

Die genaue Definition des Verstimmungsparameters hängt vom Regelalgorithmus ab, der in dem jeweiligen Abstandsregler benutzt wird. Generell wird jedoch jeder Regelalgorithmus durch eine gewisse Anzahl von Parametern beschrieben, die das Regelverhalten festlegen. Eine Erhöhung des Wertes eines Parameters kann dann je nach Funktion dieses Parameters das Regelverhalten in Richtung dynamische Fahrweise oder in Richtung kraftstoffsparende Fahrweise ändern. Die Verstimmung des Abstandsreglers lässt sich dann über diese Parameter steuern. Zweckmäßig wird ein einziger Verstimmungsparameter definiert, und die Parameter des Regelalgorithmus werden als Funktionen (beispielsweise monoton fallende oder monoton steigende Funktionen) dieses Verstimmungsparameters behandelt.

Der Verstimmungsregler kann beispielsweise so arbeiten, dass er jedes Mal, wenn die Stärke des Regeleingriffs die festgelegte Mindeststärke übersteigt, den Verstimmungsparameter um ein fest vorgegebenes Inkrement erhöht, was einer Verstimmung in Richtung kraftstoffsparenderer Fahrweise entspricht. Außerdem wird der Verstimmungsparameter jeweils nach Ablauf eines bestimmten Zeitintervalls, unabhängig davon, ob Regeleingriffe auftreten oder nicht, um ein (kleines) Dekrement verringert, bis ein bestimmter Minimalwert erreicht ist, der dem unverstimmten Regler bzw. der vom Fahrer selbst gewählten Abstimmung des Reglers entspricht. Sporadische Abbremsungen des eigenen Fahrzeugs, beispielsweise bei einer Abfolge von roten Ampeln im Stadtverkehr, führen somit nur zu vereinzelten kleinen Erhöhungen des Verstimmungsparameters, die durch die ständigen Verringerungen dieses Parameters sogleich wieder rückgängig gemacht werden und somit das Regelverhalten praktisch nicht beeinflussen. Bei häufigeren Verzögerungen in einer Stausituation können sich dagegen die Erhöhungen des Parameters akkumulieren, bis schließlich bei einer bestimmten (Soll-) Häufigkeit der Regeleingriffe ein Gleichgewicht zwischen den Erhöhungen und Verringerungen des Parameters erreicht wird. Dieser Gleichgewichtswert des Verstimmungsparameters entspricht dann einem Regelverhalten, das auf die jeweilige Stausituation abgestimmt ist. Wenn sich der Stau auflöst, sorgt die regelmäßige Verringerung des Verstimmungsparameters dafür, dass der Regler automatisch und allmählich wieder zu dem "normalen", werksseitig oder vom Fahrer eingestellten Regelverhalten zurückkehrt.

Ein weiterer vorteilhafter Effekt des erfindungsgemäßen Systems besteht darin, dass es in Stausituationen zu einem Ausgleich von Geschwindigkeitsschwankungen beiträgt und so der Gefahr entgegenwirkt, dass sich diese Geschwindigkeitsschwankungen in der Fahrzeugkolonne aufschaukeln, ggf. bis zum Fahrzeugstillstand, und zu einer erhöhten Unfallgefahr führen.

Im folgenden wird ein Ausführungsbeispiel anhand der Zeichnung näher erläutert.

Es zeigen:

Fig. 1    eine Skizze einer Folgefahrtsituation, in der das erfindungsgemäße Abstandsregelsystem Anwendung findet;

Fig. 2    ein Blockdiagramm des Abstandsregelsystems;

Fig. 3    ein Orts/Zeit-Diagramm zur Erläuterung der Wirkungsweise des erfindungsgemäßen Abstandsregelsystems;

und

Fig. 4    ein Flussdiagramm zur Erläuterung der Arbeitsweise des Abstandsregelsystems.

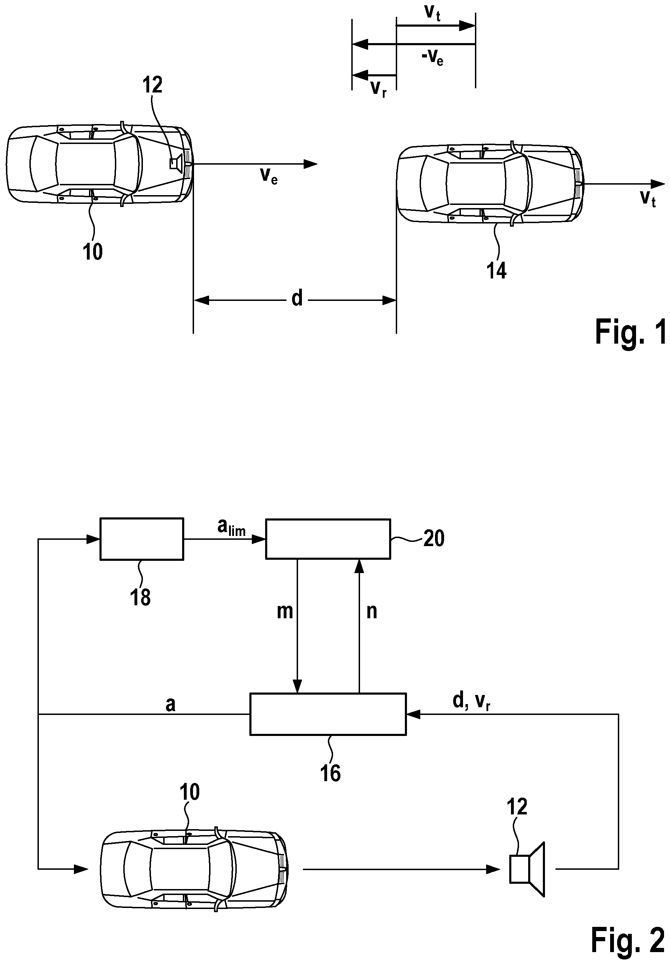

In Fig. 1 ist im Grundriss ein Kraftfahrzeug 10 gezeigt, das mit einem Abstandsregelsystem ausgerüstet ist. Zu diesem Abstandsregelsystem gehört auch ein Radarsensor 12, der zyklisch, in kurzen Intervallen, den Abstand d und die Relativgeschwindigkeit $v_r$ eines vorausfahrenden Fahrzeugs 14 misst. Die Eigengeschwindigkeit des mit dem Abstandsregelsystem ausgerüsteten Fahrzeugs 10 ist mit $v_e$ bezeichnet, und die Geschwindigkeit des Fahrzeugs 14 (Zielfahrzeug) mit vt. Es gilt: $v_r = v_t - v_e$.

Das in Fig. 2 als Blockdiagramm dargestellte Abstandsregelsystem weist einen Abstandsregler 16 auf, der in jedem Messzyklus des Radarsensors 12 die gemessenen Werte d und $v_r$ auswertet und daraus einen neuen Sollwert für die Beschleunigung a (oder bei negativem a die Verzögerung) des Fahrzeugs 10 berechnet. Dieser Sollwert wird dann durch das Antriebs- bzw. Bremssystem des Fahrzeugs 10 in eine Ist-Beschleunigung umgesetzt, mit der Folge, dass sich der Abstand d und die Relativgeschwindigkeit $v_r$ des Fahrzeugs 14 ändern und somit vom Radarsensor 12 im nächsten Messzyklus andere Werte gemessen werden, womit der Regelkreis geschlossen ist. Ein Regelalgorithmus des Abstandsreglers 16 sorgt dafür, dass der Abstand d zum Fahrzeug 14 auf einen bestimmten Sollabstand $d_{soll}$ geregelt wird.

Lediglich als Beispiel ist nachstehend eine Formel (1) angegeben, die dem Regelalgorithmus des Abstandsreglers 16 zugrunde liegen könnte.

$$a_i = \text{MIN}(a_v , a_e, (\text{MIN}(a_{i-1} + a_+ , a_{max} , \text{MAX}(a_{i-1} - a_- , \alpha (d - d_{soll}) + \beta v_r )))) \quad (1)$$

In dieser Formel ist $a_i$ die Sollbeschleunigung, die im aktuellen Messzyklus berechnet wird.

Der (positive) Parameter $\alpha$ gibt die (in diesem Beispiel lineare) Abhängigkeit der Sollbeschleunigung von der Regelabweichung d - $d_{soll}$ an. Wenn der Ist-Abstand d kleiner wird als der Sollabstand $d_{soll}$, so wird der Term $\alpha$ (d - $d_{soll}$) negativ, und dementsprechend gibt der Regler eine negative Sollbeschleunigung aus, um das Fahrzeug 10 zu verzögern.

Der (positive) Parameter $\beta$ gibt die Abhängigkeit der Sollbeschleunigung von der Relativgeschwindigkeit $v_r$ an. Wenn beispielsweise die Regelabweichung (d - $d_{soll}$) gleich null ist und $v_r$ negativ ist, d.h. der Abstand zwischen den Fahrzeugen 10 und 14 wird kleiner, so ist auch der Faktor $\beta$ $v_r$ negativ, entsprechend einer Verzögerung des eigenen Fahrzeugs, durch die $v_r$ wieder auf null zurückgeführt wird.

Die Größe $a_{i-1}$ gibt die Sollbeschleunigung an, die im vorherigen Messzyklus berechnet wurde und die, da die Sollbeschleunigung vom Antriebs- oder Bremssystem in eine Ist-Beschleunigung umgesetzt wird, jetzt der aktuellen Beschleunigung des Fahrzeugs 10 entspricht. Die Größen a+ und a_ definieren einen Korridor, innerhalb dessen sich die neue Sollbeschleunigung $a_i$ relativ zur vorherigen Sollbeschleunigung $a_{i-1}$ ändern kann. Die Größe $a_{max}$ gibt eine absolute obere Schranke für die Sollbeschleunigung an.

Die Größe $a_v$ wird von einem nicht gezeigten Geschwindigkeitsregelsystem geliefert und hat normalerweise den Wert $a_{max}$, so dass sie wirkungslos ist. Sie nimmt nur dann einen kleineren Wert an, wenn die Geschwindigkeit $v_e$ des eigenen Fahrzeugs über die vom Fahrer gewählte Sollgeschwindigkeit ansteigt.

Die Größe $a_e$ wird von einem nicht gezeigten Kollisionsvermeidungssystem geliefert und hat ebenfalls im Normalfall den Wert $a_{max}$, d.h., sie ist wirkungslos. Nur wenn das Kollisionsvermeidungssystem feststellt, dass eine akute Gefahr einer Kollision mit dem vorausfahrenden Fahrzeug 14 droht, berechnet das Kollisionsvermeidungssystem einen negativen Wert $a_e$, der notwendig ist, um die Kollision abzuwenden.

In Fig. 2 ist weiterhin ein Stauerkennungsmodul 18 gezeigt, das den zeitlichen Verlauf der Beschleunigung a des Fahrzeugs 10 sowie den zeitlichen Verlauf der Eigengeschwindigkeit $v_e$ verfolgt. Solange die Beschleunigung a oberhalb eines bestimmten negativen Schwellenwertes von beispielsweise -1 m/s² liegt, speichert das Stauerkennungsmodul 18 jeweils das bisher erreichte Maximum der Eigengeschwindigkeit $v_e$. Sobald die Beschleunigung a unter den Schwellenwert sinkt, entscheidet das Stauerkennungsmodul 18 anhand dieser erreichten Maximalgeschwindigkeit, ob ein Stau vorliegt und ggf. in welche Klasse dieser Stau gehört.

Wenn die gespeicherte Maximalgeschwindigkeit größer ist als beispielsweise 60 km/h, so entscheidet das Stauerkennungsmodul 18, dass kein Stau vorliegt. Wenn die Maximalgeschwindigkeit unterhalb von 60 km/h aber oberhalb eines zweiten Schwellenwertes von beispielsweise 25 km/h liegt, so entscheidet das Stauerkennungsmodul 18, dass zähflüssiger Verkehr oder aber ein leichter Stau vorliegt, wie er typischerweise bei Fahrbahnverengungen auftritt. In diesem Fall wird ein Schwellenwert $a_{lim}$ für die Beschleunigung auf beispielsweise -1,5 m/s² festgelegt und an einen Verstimmungsregler 20 übermittelt.

Wenn die gespeicherte Maximalgeschwindigkeit unter 25 km/h liegt, entscheidet das Stauerkennungsmodul 18, dass ein langsamer Stau (Stopp and Go) vorliegt, und der Schwellenwert $a_{lim}$ wird auf -1,0 m/s² festgesetzt.

Nach dieser Entscheidung wird die gespeicherte Maximalgeschwindigkeit gelöscht, und die Geschwindigkeitsaufzeichnung beginnt von neuem.

Wie symbolisch in Fig. 2 dargestellt ist, reagiert der Verstimmungsregler 20 auf eine Häufigkeit n von Ereignissen, bei denen die vom Abstandsregler 16 berechnete Sollbeschleunigung unter $a_{lim}$ sinkt. In Abhängigkeit von dieser Häufigkeit n gibt der Verstimmungsregler 20 an den Abstandsregler 16 einen Verstimmungsparameter m aus, der durch Veränderung eines oder mehrerer der Parameter $\alpha$, $\beta$, $a_{max}$, $a_+$, $a_-$ das Verhalten des Abstandsreglers beeinflusst.

Beispielsweise kann der Parameter $\alpha = \alpha(m)$ eine monoton fallende Funktion von m sein. Wenn m größer wird, reagiert der Abstandsregler folglich toleranter auf die Regelabweichungen $(d - d_{soll})$.

Ebenso kann auch $\beta = \beta(m)$ eine monoton fallende Funktion von m sein, so dass der Abstandsregler größere Schwankungen der Relativgeschwindigkeit $v_r$ toleriert.

Auch $a_{max} = a_{max}(m)$ kann eine monoton fallende Funktion von m sein, mit der Folge, dass mit zunehmendem m die Maximalbeschleunigung des Fahrzeugs 10 abnimmt.

In einer modifizierten Ausführungsform könnte auch $d_{soll}$ als Funktion von m verändert werden oder durch ein von m abhängiges Toleranzintervall ersetzt werden.

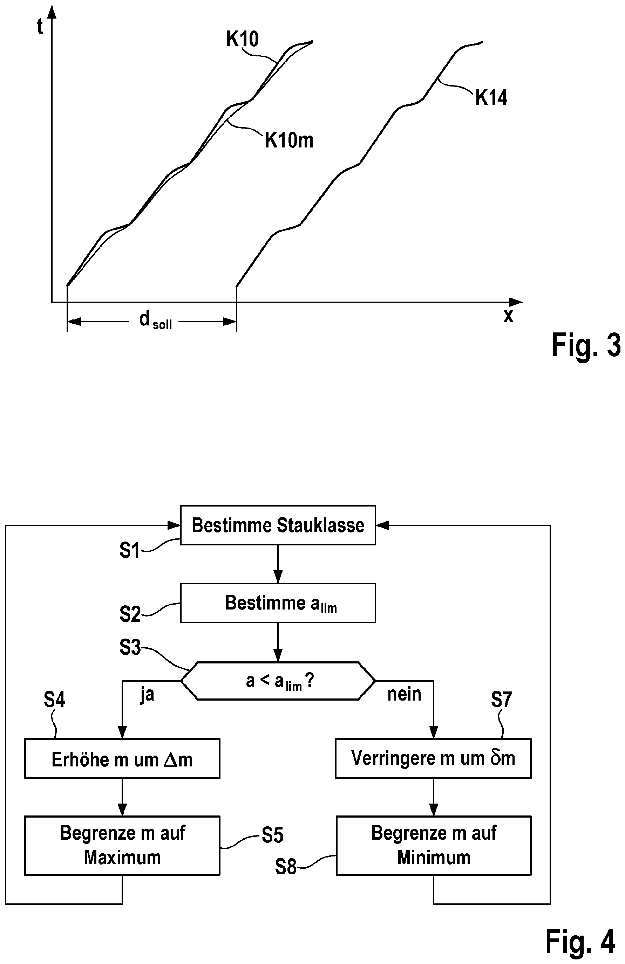

Der Effekt des Verstimmungsparameters m ist in Fig. 3 graphisch veranschaulicht. Die Kurve K14 in Fig. 3 zeigt den Ort x des Fahrzeugs 14 als Funktion der Zeit t für eine typische Stausituation mit wechselnden Beschleunigungs- und Verzögerungsphasen. Die Kurve K10 in Fig. 3 zeigt die entsprechende Orts/Zeit-Kurve des Fahrzeugs 10 für den Fall, dass der Abstandregler 16 nicht verstimmt ist (m = 0). In diesem Fall hält der Regler den Abstand d nahezu konstant auf dem Sollwert $d_{soll}$, so dass die Kurve K10 praktisch eine längs der x-Achse verschobene Kopie der Kurve K14 ist. Das eigene Fahrzeug 10 macht somit alle Beschleunigungen und Verzögerungen des vorausfahrenden Fahrzeugs 14 mit, was generell zu einem erhöhten Kraftstoffverbrauch führt. In der Praxis wird der Abstand d innerhalb einer gewissen Bandbreite, die von der Abstimmung des Abstandsreglers abhängig ist, um $d_{soll}$ schwanken, was jedoch in Fig. 3 nicht dargestellt ist.

Die Kurve K10m in Fig. 3 illustriert den Fall, dass der Abstandsregler 16 verstimmt ist (m > 0). Die Folge ist, dass größere Regelabweichungen $(d - d_{soll})$ zugelassen werden, so dass das Fahrzeug 10 in den Beschleunigungsphasen weniger stark beschleunigt und dementsprechend in den Verzögerungsphasen weniger stark gebremst zu werden braucht. die Häufigkeit n nimmt dementsprechend ab, und es wird eine wesentlich kraftstoffsparendere Fahrweise erreicht.

In Fig. 4 ist die Arbeitsweise des oben beschriebenen Abstandsregelsystems in einem Flussdiagramm dargestellt. Die Schrittfolge nach diesem Flussdiagramm wird zyklisch ausgeführt, beispielsweise in Intervallen von einer Sekunde, einer Zehntelsekunde oder dergleichen. In Schritt S1 wird anhand der zuletzt im Stauerkennungsmodul 18 gespeicherten Maximalgeschwindigkeit des eigenen Fahrzeugs die Stauklasse bestimmt. In Schritt S2 wird ein der Stauklasse entsprechender Schwellenwert $a_{lim}$ festgelegt. In Schritt S3 wird dann geprüft, ob die aktuell vom Abstandsregler 16 ausgegebene Sollbeschleunigung a kleiner ist als $a_{lim}$. Wenn das der Fall ist, wird durch den Verstimmungsregler 20 in Schritt S4 der Verstimmungsparameter m um ein bestimmtes Inkrement $\Delta m$ erhöht. Wenn dabei der Verstimmungsparameter einen bestimmten Maximalwert überschreitet, wird er in Schritt S5 auf diesen Maximalwert begrenzt. Anschließend erfolgt ein Rücksprung zu Schritt S1, und die Schrittfolge wird im nächsten Zyklus erneut durchlaufen.

Wenn die Abfrage in Schritt S3 ergibt, dass das Fahrzeug nicht so stark gebremst wurde und somit der Schwellenwert $a_{lim}$ nicht unterschritten wurde, so wird in Schritt S7 der Verstimmungsparameter um ein Dekrement $\delta m$ verringert. Wenn dabei der Verstimmungsparameter einen gewissen Minimalwert, beispielsweise den Wert null unterschreitet, wird er in Schritt S8 auf den Minimalwert begrenzt, und anschließend erfolgt wieder ein Rücksprung zu Schritt S1.

Das Dekrement $\delta m$ ist dem Betrage nach kleiner als das Inkrement $\Delta m$ und beträgt beispielsweise $1/20$ $\Delta m$. Wenn die Schrittfolge gemäß Fig. 4 beispielsweise in Sekundenabständen durchlaufen wird, so bedeutet dies, dass der Verstimmungsparameter m praktisch auf dem Standardwert null verharrt, wenn die Beschleunigung des Fahrzeugs 10 innerhalb eines Zeitraums von zwanzig Sekunden höchstens eine Sekunde lang unter $a_{lim}$ liegt. Erst wenn sich Bremsvorgänge häufen, bei denen $a_{lim}$ unterschritten wird, überwiegt die Erhöhung von m in Schritt S4, so dass der Abstandsregler nach und nach in Richtung ausgeglichenere Fahrweise verstimmt wird. Wenn die Häufigkeit dieser stärkeren Bremsungen wieder abnimmt, geht die Verstimmung entsprechend den Dekrementen $\delta m$ in Schritt S7 wieder zurück.

In dem oben beschriebenen Beispiel hat auch die Dauer der einzelnen Bremsvorgänge, also die Dauer der Zeiten, in denen $a_{lim}$ unterschritten wird, einen Einfluss auf die Verstimmung. Es ist jedoch auch eine Ausführungsform denkbar, bei der der Schritt S4 nur einmal ausgeführt wird, sobald die Beschleunigung den Schwellenwert $a_{lim}$ unterschreitet, und der Rücksprung zu S1 erst ausgeführt wird, nachdem $a_{lim}$ zumindest kurzeitig wieder überschritten wurde.

Ebenso sind auch Ausführungsformen denkbar, bei denen der Verstimmungsregler 20 nicht nur auf die Häufigkeit von starken Bremsvorgängen (Unterschreitungen von $a_{lim}$) reagiert, sondern zusätzlich auch auf starke Beschleunigungsvorgänge.

**Patentansprüche**

1. Abstandsregelsystem für Kraftfahrzeuge (10), mit einem Sensor (12) zur Messung des Abstands (d) zu einem vorausfahrenden Fahrzeug (14), einem Abstandsregler (16) zur Berechnung von Regeleingriffen in das Antriebs- und/oder Bremssystem des eigenen Fahrzeugs (10) zur Regelung des Abstands auf einem Sollabstand ($d_{soll}$), wobei in dem Abstandsregler (16) ein Verstimmungsparameter (m) einstellbar ist, der die Stärke der Reaktion des Abstandsreglers auf Regelabweichungen bestimmt, und mit einem Stauerkennungsmodul (18), **gekennzeichnet durch** einen Verstimmungsregler (20), der, wenn das Stauerkennungsmodul (18) einen Verkehrsstau erkennt, auf die Häufigkeit (n) von Regeleingriffen reagiert, deren Stärke oberhalb einer gewissen Mindeststärke liegt, und der in Abhängigkeit von dieser Häufigkeit (n) einen Verstimmungsparameter (m) an den Abstandsregler (16) ausgibt und mit dem Verstimmungsparameter (m) als Stellgröße die Häufigkeit (n) von Regeleingriffen, deren Stärke oberhalb einer gewissen Mindeststärke liegt, auf eine an die Stausituation angepasste Sollhäufigkeit regelt.

2. Abstandsregelsystem nach Anspruch 1, bei dem das Stauerkennungsmodul (18) jeweils bis zu dem Zeitpunkt, an dem die Beschleunigung des eigenen Fahrzeugs (10) einen bestimmten negativen Schwellenwert unterschreitet, den erreichten Maximalwert der Eigengeschwindigkeit ($v_e$) des eigenen Fahrzeugs (10) aufzeichnet und entscheidet, dass ein Verkehrsstau vorliegt, wenn der erreichte Maximalwert unterhalb eines bestimmten Wertes liegt.

3. Abstandsregelsystem nach Anspruch 2, bei dem der Verstimmungsregler (20) die Mindeststärke der Regeleingriffe in Abhängigkeit von dem Maximalwert der Eigengeschwindigkeit ($v_e$) festlegt, anhand dessen das Stauerkennungsmodul (18) den Verkehrsstau erkannt hat.

4. Abstandsregelsystem nach einem der vorstehenden Ansprüche, bei dem der Verstimmungsregler Regeleingriffe zählt, bei denen die Beschleunigung (a) des Fahrzeugs (10) einen negativen Schwellenwert ($a_{lim}$) unterschreitet, der die Mindeststärke des Regeleingriffs angibt.

5. Abstandsregelsystem nach Anspruch 4, bei dem der Verstimmungsregler (20) den Verstimmungsparameter (m) in regelmäßigen Zeitintervallen jeweils um ein bestimmtes Dekrement (dm) verringert und den Verstimmungsparameter (m) bei jeder Unterschreitung des die Mindeststärke angebenden Schwellenwertes ($a_{lim}$) um ein bestimmtes Inkrement (Dm) erhöht.

6. Abstandsregelsystem nach einem der vorstehenden Ansprüche, bei dem der Abstandsregler (16) einen Regelalgorithmus ausführt, der durch eine Anzahl von Parametern (a, b) gekennzeichnet ist, und mindestens einer dieser Parameter eine Funktion des Verstimmungsparameters (m) ist.

**Claims**

1. Distance control system for motor vehicles (10), having a sensor (12) for measuring the distance (d) to a preceding vehicle (14), a distance controller (16) for calculating control interventions in the drive and/or braking system of the driver's own vehicle (10) in order to control the distance to a setpoint distance ($d_{soll}$), wherein a detuning parameter (m) which determines the strength of the reaction of the distance controller to control deviations can be set in the distance controller (16), and having a jam detection module (18), **characterized by** a detuning controller (20) which, if the jam detection module (18) detects a traffic jam, reacts to the frequency (n) of control interventions, the strength of which lies above a certain minimum strength, and which, depending on said frequency (n), outputs a detuning parameter (m) to the distance controller (16) and, with the detuning parameter (m) as a manipulated variable, controls the frequency (n) of control interventions, the strength of which lies above a certain minimum strength, to a setpoint frequency that is adapted to the traffic situation.

2. Distance control system according to Claim 1, in which the jam detection module (18) in each case up to the time at which the acceleration of the driver's own vehicle (10) falls below a certain negative threshold value records the maximum value reached for the inherent speed ($v_e$) of the driver's own vehicle (10) and decides that there is a traffic jam if the maximum value achieved lies below a certain value.

3. Distance control system according to Claim 2, in which the detuning regulator (20) determines the minimum strength of the control interventions depending on the maximum value of the inherent speed ($v_e$), on the basis of which maximum value the jam detection module (18) has detected the traffic jam.

4. Distance control system according to one of the preceding claims, in which the detuning controller includes control interventions in which the acceleration (a) of the vehicle (10) falls short of a negative threshold value ($a_{lim}$) which indicates the minimum strength of the control intervention.

5. Distance control system according to Claim 4, in which the detuning controller (20) reduces the detuning parameter (m) in each case by a certain decrement (dm) at regular time intervals and increases the detuning parameter (m) by a certain increment (Dm) each time the threshold value ($a_{lim}$) indicating the minimum strength is fallen short of.

6. Distance control system according to one of the preceding claims, in which the distance controller (16) carries out a control algorithm which is identified by a number of parameters (a, b), and at least one of said parameters is a function of the detuning parameter (m).

**Revendications**

1. Système de régulation de distance pour véhicules automobiles (10), comprenant un capteur (12) pour mesurer la distance (d) par rapport à un véhicule qui précède (14), un régulateur de distance (16) pour calculer des interventions de régulation dans le système d'entraînement et/ou de freinage du propre véhicule (10) pour réguler la distance sur une distance de consigne ($d_{soll}$), un paramètre de désaccord (m) étant réglable dans le régulateur de distance (16), qui détermine l'intensité de la réaction du régulateur de distance à des écarts de régulation, et un module d'identification d'embouteillage (18),
**caractérisé par** un régulateur de désaccord (20) qui, lorsque le module d'identification d'embouteillage (18) identifie un embouteillage, répond à la fréquence (n) des interventions de régulation dont l'intensité se situe au-dessus d'une certaine intensité minimale, et qui délivre en fonction de cette fréquence (n) un paramètre de désaccord (m) au régulateur de distance (16) et régule avec le paramètre de désaccord (m) comme grandeur de réglage la fréquence (n) des interventions de régulation, dont l'intensité se situe au-dessus d'une certaine intensité minimale, sur une fréquence de consigne adaptée à une situation d'embouteillage.

2. Système de régulation de distance selon la revendication 1, dans lequel le module d'identification d'embouteillage (18) enregistre, respectivement jusqu'à l'instant où l'accélération du véhicule propre (10) soupasse une certaine valeur seuil négative, la valeur maximale atteinte de la vitesse propre ($v_e$) du véhicule propre (10) et décide qu'un embouteillage existe si la valeur maximale atteinte se situe au-dessous d'une certaine valeur.

3. Système de régulation de distance selon la revendication 2, dans lequel le régulateur de désaccord (20) définit l'intensité minimale des interventions de régulation en fonction de la valeur maximale de la vitesse propre ($v_e$) à l'aide de laquelle le module d'identification d'embouteillage (18) a identifié l'embouteillage.

4. Système de régulation de distance selon l'une quelconque des revendications précédentes, dans lequel le régulateur de désaccord compte les interventions de régulation dans lesquelles l'accélération (a) du véhicule (10) soupasse une valeur seuil négative ($a_{lim}$) qui indique l'intensité minimale de l'intervention de régulation.

5. Système de régulation de distance selon la revendication 4, dans lequel le régulateur de désaccord (20) diminue respectivement d'un certain décrément (dm) le paramètre de désaccord (m) à intervalles de temps réguliers et augmente d'un certain incrément (Dm) le paramètre de désaccord (m) à chaque soupassement de la valeur seuil ($a_{lim}$) indiquant l'intensité minimale.

6. Système de régulation de distance selon l'une quelconque des revendications précédentes, dans lequel le régulateur de distance (16) exécute un algorithme de régulation qui est **caractérisé par** un nombre de paramètres (a, b), et au moins l'un de ces paramètres est une fonction du paramètre de désaccord (m).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007045523 A1
- DE 102006056631 A1
- DE 10349434 A1